# EUROPÄISCHE PATENTSCHRIFT

(11) **EP 2 188 659 B1**
(45) Veröffentlichungstag und Bekanntmachung des Hinweises auf die Patenterteilung: **16.04.2014**
(21) Anmeldenummer: 08801862.7
(22) Anmeldetag: 05.09.2008
(51) Int. Cl.: G02B 6/44, B65H 55/04

(54) **VERFAHREN ZUR HERSTELLUNG EINER SELBSTTRAGENDEN GLASFASERSPULE**
METHOD OF PRODUCTION OF A SELF-SUPPORTING OPTICAL FIBRE SPOOL
PROCÉDÉ DE FABRICATION D'UNE BOBINE AUTOPORTANTE DE FIBRES OPTIQUES

(30) Priorität: 13.09.2007 DE 102007043719
(43) Veröffentlichungstag der Anmeldung: 26.05.2010
(73) Patentinhaber: ATLAS ELEKTRONIK GmbH, 28309 Bremen (DE)
(72) Erfinder: BRENNER, Axel, 28259 Bremen (DE); HUCKFELDT, Sönke, 25336 Elmshorn (DE); JUNGE, Wilfried, 28309 Bremen (DE); LINDNER, Jürgen, 27777 Ganderkesee (DE); FUHRMANN, Dirk, 22880 Wedel (DE); BARTHOLOMÄUS, Ralf, 22880 Wedel (DE)
(86) Internationale Anmeldenummer: PCT/EP2008/007267
(87) Internationale Veröffentlichungsnummer: WO 2009/036897

(56) Entgegenhaltungen:
- EP-A- 0 342 663
- EP-A- 0 429 238
- EP-A- 0 473 350
- GB-A- 2 349 440

## Beschreibung

Die Erfindung betrifft ein Verfahren zur Herstellung einer Glasfaserspule nach dem Oberbegriff des Anspruchs 1.

Bei einer bekannten Glasfaserspule dieser Art (US 5 493 627) wird als Bindemittel zur Stabilisierung des selbsttragenden Wickels ein in Methan gelöstes Polymerharz, z.B. Polyvenylaccetat-Harz wie Vinac B15 oder ein Polyamidharz wie Elvamide 8063 Harz der Firma Dupont, verwendet. Die Konzentration des Bindemittels ist so gewählt, dass eine Klebekraft erreicht wird, die einen ausreichend stabilen, selbsttragenden Wickel gewährleistet, von dem die Glasfaser ohne Gefahr des Knickens der Glasfaser aus dem Inneren des Wickels heraus abgespult werden kann. Die Glasfaser wird maschinell auf einen Wickeldorn in mehreren Lagen aufgewickelt, wobei das in Methanol gelöste Bindemittel während des Wickelvorgangs mittels einer Bürste auf jede vierte Glasfaserlage aufgetragen wird. Ist der Wickel vollständig gewickelt, so wird der Wickeldorn aus dem Wickel entfernt, und das Bindemittel härtet langsam aus. Die Glasfaserspule mit der aufgewickelten Glasfaser von einer Länge von 10,5km wird zur Übertragung von Informationen und Daten zwischen einem Unterwasserfahrzeug und einem vom Unterwasserfahrzeug aussetzbaren Projektil eingesetzt und ist z.B. im Unterwasserprojektil angeordnet, das von einem Unterseeboot ausgesetzt wird. Während des Aussetzens und während der Fahrt des Projektils und/oder des Unterwasserfahrzeugs spult die Glasfaser vom Wickel ab.

Der Erfindung liegt die Aufgabe zugrunde, eine Glasfaserspule mit selbsttragendem Wickel anzugeben, der mit einer geringen Zugkraft von der innersten Lage aus zuverlässig abgespult werden kann, ohne dass beim Abspulen Schlaufen aus dem Wickel herausgezogen oder die Glasfaser geknickt und zerstört wird. Wegen Unterwasseranwendung soll dabei der abspulende Wickel keine umweltschädlichen Stoffe freisetzen.

Die Aufgabe ist erfindungsgemäß durch die Merkmale im Anspruch 1 gelöst.

Die Glasfaserspule hat den Vorteil, dass durch den Aufbau des Wickels in Kreuzwickeltechnik ein leichtes und sicheres Abspulen der Glasfaser sichergestellt ist und die abspulende Glasfaser benachbarte Windungen, die mit ihr verklebt sind, nicht mitreißt, so dass sich nicht lose Schleifen bilden, die das Ausspulen der Glasfaser aus dem Wickelinnern behindern. Der eingesetzte Tränkstoff verbessert den Zusammenhalt des Wickels und gewährleistet beim Abspulen ein gleichmäßiges, ruckfreies Ablösen der Glasfaser von der benachbarten Windung. Der Tränkstoff ermöglicht aufgrund seiner Eigenschaften ein vereinfachtes Verfahren zu seiner Einbringung in den Wickel, indem der Wickel nach einer durch Erwärmung herbeigeführten Verflüssigung des Tränkstoffs mit diesem getränkt wird, z.B. in einem Vakuumtränkungsverfahren. Nach Wiedererstarren hat der Tränkstoff im Bereich der üblichen Betriebstemperatur der Glasfaser, die zwischen 0° bis 40°C liegt, gleichmäßige physikalische Eigenschaften, wie Zähigkeit, Klebekraft und Viskosität. Der Tränkstoff ist lösungsmittelfrei, gesundheitlich unbedenklich, nicht im Salzwasser löslich und umweltverträglich.

Ein vorteilhaftes Verfahren zur Herstellung der Glasfaserspule ist in Anspruch 1 angegeben. Durch die Drehung der Glasfaser in sich selbst beim Aufspulen der Kreuzwicklung wird gewährleistet, dass die Glasfaser beim Abziehen drallfrei ist.

Zweckmäßige Ausführungsformen des erfindungsgemäßen Verfahrens mit vorteilhaften Weiterbildungen und Ausgestaltungen des Verfahrens ergeben sich aus den weiteren Ansprüchen 2 bis 12.

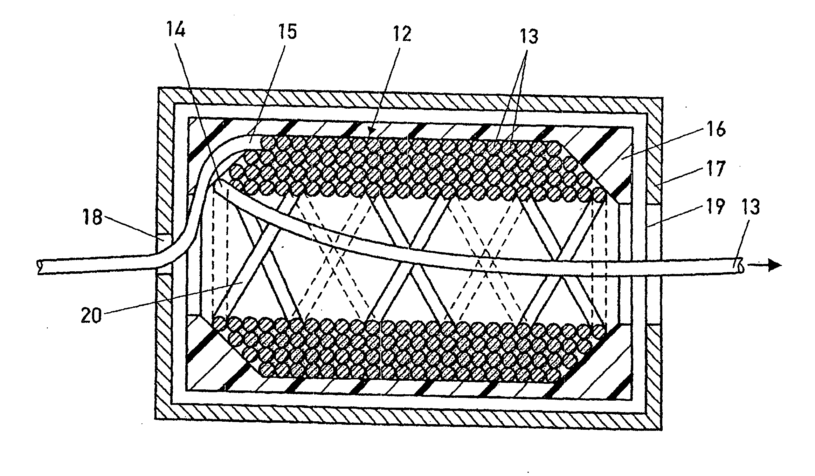

Die Erfindung ist anhand eines in der Zeichnung dargestellten Ausführungsbeispiels im folgenden näher beschrieben. Dabei zeigt die Zeichnung in schematischer Darstellung einen Längsschnitt einer Glasfaserspule.

Die in der Zeichnung schematisiert im Längsschnitt dargestellte Glasfaserspule dient beispielsweise dem Datenverkehr zwischen einem U-Boot und einem von dem U-Boot abgesetzten, ziellaufenden Torpedo. Sowohl im Torpedo als auch im U-Boot ist eine solche Glasfaserspule angeordnet, wobei die Glasfaserenden der beiden Glasfaserspulen durch einen optischen Koppler miteinander mechanisch und optisch verbunden sind. Ein solches Szenarium ist beispielsweise in der EP 0 337 254 A2 dargestellt und beschrieben.

Wie aus der Schnittdarstellung zu entnehmen ist, weist die Glasfaserspule eine zu einem abspulbaren, mehrlagigen Wickel 12 aufgewickelte Glasfaser 13 zur Übertragung von Informationen auf, die mehrere Kilometer lang ist. Durch die Vorverdrallung bei der Aufwicklung der Glasfaser ist garantiert, dass die ablaufende Glasfaser drallfrei ist. Der Wickel 12 ist als Kreuzwicklung mit sich kreuzenden Windungen 20 aufgebaut, wie diese z.B. von Garnspulen her bekannt ist. Um eine solche Kreuzwicklung zu illustrieren, sind in dem schematischen Längsschnitt einige aufeinanderfolgende Windungen 20 eingezeichnet, wobei der vorn liegende Teil der Windungen 20, der durch die Schnittführung eigentlich nicht zu sehen ist, strichliniert eingezeichnet ist. Der Wickelanfang 14 des Wickels 12 liegt am Anfang der innersten Windungslage und das Wickelende 15 am Ende der äußersten Windungslage. Der Wickel 12 besitzt keinen Wickelträger, sondern ist selbsttragend ausgeführt, indem die einzelnen Windungen 20 durch ein geeignetes, klebendes Bindemittel aneinander fixiert sind. Als Bindemittel wird ein seewasserbeständiger, chemisch inerter und durch Erwärmung verflüssigbarer Tränkstoff auf Kohlenwasserstoffbasis verwendet. Beispiele für den Tränkstoff sind Vaseline, z.B. Zinke DAB10 oder Merkur Typ 641, Wachs oder Wachsgel, z.B. Sasol Typ Varagel 6527, eine Mischung aus Vaseline und hochschmelzenden Wachsen, z. B. Ceridust 3719 oder Ceridust 9325F der Firma Clariant, wobei diesen weitere Additive zugemischt sein können, eine Mischung aus Weißöl und Wachs, z.B. WOP150PB der Firma Merkur mit einem Wachsanteil von 25% bis 30% Ceridust 3719, oder eine Mischung aus Rizinusöl und Kalziumseife (Calcium-12-hydroxystearat) mit einem Rizinusöl-Anteil von 85% bis 95%. Die Phasenumwandlungstemperatur aller dieser Stoffe, bei der die Phase oder der Aggregatszustand sich ändert, also die Stoffe aus der festen in die flüssige Phase und umgekehrt übergehen, liegt oberhalb der normalen Betriebstemperatur, der der Wickel 12 ausgesetzt ist. Diese Betriebstemperatur beträgt üblicherweise 0° bis 40°C.

Der selbsttragende, formstabile Wickel 12 ist in ein hohlzylindrisches Formstück 16 eingesetzt, das von einem metallischen Gehäuse 17 umschlossen ist. Das aus seewasserfestem Aluminium hergestellte Gehäuse 17 weist an den Stirnseiten Öffnungen 18, 19 auf. Die Öffnung 18 dient zur Hindurchführung der vom Wickelende 15 sich fortsetzenden Glasfaser 13 und die koaxial angeordnete Öffnung 19 dient zum Hindurchführen der zum Wickelanfang 14 führenden Glasfaser 13 und bildet die Auslauföffnung für die abspulende Glasfaser 13. In diesem Aufbau wird die Glasfaserspule z.B. in eine Kammer im Heck eines Torpedos eingesetzt, wobei die Kammer über eine Wasserzuführung geflutet ist. Die zentral aus dem Wickel 13 auslaufende Glasfaser 13 ist dann in einem Führungsrohr bis zum Austritt aus dem Torpedokörper geführt, wobei das Führungsrohr zentral durch den Antriebsmotor und die Antriebswelle des Torpedos hindurch verläuft und endseitig über die Propeller des Torpedos vorsteht. Die vom Wickelende 15 wegführende, durch die Öffnung 19 herausgeführte Glasfaser 13 ist an eine im Torpedokörper integrierte Sende- und Empfangseinrichtung für den Datenverkehr angeschlossen.

Die beschriebene Glasfaserspule wird wie folgt hergestellt:
Die lange Glasfaser 13 wird maschinell auf einen Wickeldorn in Kreuzwickelausführung mit einer Vielzahl von übereinanderliegenden Windungslagen aufgewickelt. Beim Wickeln wird die Glasfaser 13 auf Zug gespannt und die auf die Glasfaser 13 wirkende Zugkraft vom Wickeln der inneren Windungslage bis hin zum Wickeln der äußersten Windungslage zunehmend verkleinert. Die Zugkraft kann dabei von Windungslage zu Windungslage kontinuierlich oder diskontinuierlich gesenkt werden. Innerhalb einer Windungslage wird die Zugkraft konstant gehalten. Dies hat den Vorteil, dass in den Kreuzungspunkten der Windungen 20, die leichte Knickpunkte der Glasfaser 13 darstellen, keine oder nur vernachlässigbar kleine Lichtverluste in der Glasfaser 13 auftreten und somit die Dämpfung in der Übersetzung von Informationen oder Daten klein gehalten werden kann. Um ein evtl. Abrutschen der endseitigen Windungen 20 des Wickels 12 beim Wickeln zu vermeiden, wird der Wickel 12 mit einer von innen nach außen abnehmenden Zahl von Windungen 20 pro Windungslage ausgeführt, so dass der endgefertigte Wickel 12 eine im Schnitt längs der Wickelachse gesehen Trapezform aufweist, wie dies aus der Zeichnung ersichtlich ist. Selbstverständlich kann der Wickel 12 auch als kompletter Hohlzylinder gewickelt werden.

Nach vollständigem Aufwickeln der Glasfaser 13 wird der Wickel 12 mit darin belassenem Wickeldorn aus der Wickelmaschine entnommen und mit dem chemisch inerten, seewasserbeständigen Tränkstoff auf Kohlenwasserstoffbasis, wie er vorstehend in verschiedenen Beispielen angegeben worden ist, getränkt, wobei zuvor der Tränkstoff durch Erwärmen auf eine Temperatur, die größer ist als die Temperatur, bei der der Tränkstoff seine Phase oder seinen Aggregatzustand wechselt, verflüssigt worden ist. Diese Temperatur ist hier größer als 70°C. Das Tränken des vom Wickeldorn getragenen Wickels 12 erfolgt z.B. mittels eines Vakuumtränkungsverfahrens oder im Tauchbad. Anschließend lässt man den getränkten Wickel 12 abtropfen, bis sich ein vorgegebener Tränkungsgrad des Wickels 12 eingestellt hat. Dieser Tränkungsgrad wird dadurch bestimmt, dass das sich durch Abtropfen verringernde Gewicht des Wickels 12 gemessen und bei Erreichen eines vorgegebenen Gewichtes der Abtropfvorgang abgebrochen wird. Nunmehr wird der Wickel 12 auf eine Temperatur abgekühlt, die unterhalb seiner Phasenumwandlungstemperatur liegt, z.B. auf Raumtemperatur. Dadurch beginnt der Tränkstoff zu erstarren und geht in seinen festen, gelartigen Zustand zurück. Bei der Abkühlung des Wickels 12 wird der Wickeldorn horizontal ausgerichtet und rotatorisch angetrieben, so dass sich der zunächst noch flüssige Tränkstoff gleichmäßig im Wickel 12 verteilt. Nach Abkühlen des Wickels 12 wird der Wickeldorn entfernt.

## Patentansprüche

1. Verfahren zur Herstellung einer Glasfaserspule mit einem mehrlagigen, selbsttragenden Wickel (12) einer Glasfaser (13) zur Übertragung von Informationen, die aus dem Wickelinnern abspulbar ist, bei dem die Glasfaser (13) auf einen Wickeldorn zu einem Wickel (12) aufgewickelt wird und der Wickeldorn später aus dem Wickel (13) entfernt wird, **dadurch gekennzeichnet, dass** der Wickel (12) in Kreuzwickelausführung gewickelt wird, dass der Wickel (12) mit darin belassenem Wickeldorn mit einem chemisch inerten, seewasserbeständigen und durch Erwärmen verflüssigten Tränkstoff auf Kohlenwasserstoffbasis getränkt wird, dass durch Abtropfen eines Teils des Tränkstoffs ein vorgegebener Tränkungsgrad des Wickels (12) eingestellt wird und dass der Wickel (12) bei rotierendem, horizontal ausgerichtetem Wickeldorn unter die Phasenumwandlungstemperatur des Tränkstoffs abgekühlt und der Wickeldorn aus dem abgekühlten Wickel (12) herausgenommen wird.

2. Verfahren nach Anspruch 1, **dadurch gekennzeichnet, dass** die Glasfaser (13) bei jeder Windung beim Aufwickeln in sich selbst gedreht wird.

3. Verfahren nach Anspruch 1 oder 2, **dadurch gekennzeichnet, dass** beim Wickeln die Glasfaser (13) einer Zugkraft ausgesetzt wird und dass die Zugkraft vom Wickeln der innersten Windungslage bis hin zum Wickeln der äußersten Windungslage zunehmend reduziert wird.

4. Verfahren nach Anspruch 3, **dadurch gekennzeichnet, dass** die Zugkraft während des Wickelns einer Windungslage konstant gehalten wird.

5. Verfahren nach einem der Ansprüche 1 bis 4, **dadurch gekennzeichnet, dass** ein Tränkstoff mit einer Phasenumwandlungstemperatur verwendet wird, die oberhalb der maximalen Betriebstemperatur der Glasfaserspule liegt.

6. Verfahren nach einem der Ansprüche 1 bis 5, **dadurch gekennzeichnet, dass** die Tränkung des Wickels (12) im Vakuum durchgeführt wird.

7. Verfahren nach einem der Ansprüche 1 bis 6, **dadurch gekennzeichnet, dass** der Tränkungsgrad des Wickels (12) anhand der Gewichtsmessung des abtropfenden Wickels (12) bestimmt wird.

8. Verfahren nach einem der Ansprüche 1 bis 7, **dadurch gekennzeichnet, dass** als Tränkstoff Vaseline, verwendet wird.

9. Verfahren nach einem der Ansprüche 1 bis 7, **dadurch gekennzeichnet, dass** als Tränkstoff ein Wachs oder Wachsgel, verwendet wird.

10. Verfahren nach einem der Ansprüche 1 bis 7, **dadurch gekennzeichnet, dass** als Tränkstoff eine Mischung aus Vaseline und hochschmelzenden Wachsen, mit vorzugsweise weiteren Additiven verwendet wird.

11. Verfahren nach einem der Ansprüche 1 bis 7, **dadurch gekennzeichnet, dass** als Tränkstoff eine Mischung aus Weißöl und Wachs verwendet wird.

12. Verfahren nach einem der Ansprüche 1 bis 7, **dadurch gekennzeichnet, dass** als Tränkstoff eine Mischung aus Rizinusöl, vorzugsweise mit einem Anteil von 85%-95% und Kalziumseife verwendet wird.

## Claims

1. Method for manufacturing a glass fibre coil with a multilayer, self-supporting winding (12) of a glass fibre (13) for the transmission of information, which can be unwound from the winding interior, in which the glass fibre (13) is wound up onto a winding mandrel to form a winding (12) and the winding mandrel is later removed from the winding (13), **characterised by** that the winding (12) is wound in a cross-winding format, that the winding (12) with the winding mandrel left therein is impregnated using a chemically inert, seawater-resistant impregnating material that is hydrocarbon-based and liquefied by heating, that by draining a portion of the impregnating material a predetermined degree of impregnation of the winding (12) is set and that the winding (12) is cooled with the winding mandrel rotating and horizontally aligned below the phase transition temperature of the impregnating material and the winding mandrel is removed from the cooled winding (12).

2. Method according to claim 1, **characterised by** that the glass fibre (13) is twisted in itself on each turn when winding up.

3. Method according to claim 1 or 2, **characterised by** that upon winding the glass fibre (13) is exposed to a tensile force and that the tensile force is reduced increasingly from the winding of the innermost turn layer to the winding of the outermost turn layer.

4. Method according to claim 3, **characterised by** that the tensile force is kept constant during the winding of a turn layer.

5. Method according to one of claims 1 to 4, **characterised by** that an impregnating material is used with a phase transition temperature that lies above the maximum operating temperature of the glass fibre coil.

6. Method according to one of claims 1 to 5, **characterised by** that the impregnation of the winding (12) is carried out in a vacuum.

7. Method according to one of claims 1 to 6, **characterised by** that the degree of impregnation of the winding (12) is determined with reference to the weight measurement of the draining winding (12).

8. Method according to one of claims 1 to 7, **characterised by** that Vaseline is used as impregnating material.

9. Method according to one of claims 1 to 7, **characterised by** that a wax or wax gel is used as impregnating material.

10. Method according to one of claims 1 to 7, **characterised by** that a blend of Vaseline and high-melting-point waxes, preferably with other additives, is used as impregnating material.

11. Method according to one of claims 1 to 7, **characterised by** that a blend of white oil and wax is used as impregnating material.

12. Method according to one of claims 1 to 7, **characterised by** that a blend of castor oil, preferably with a share of 85%-95% and calcium soap is used as impregnating material.

## Revendications

1. Procédé de fabrication d'une bobine de fibres optiques comprenant un enroulement (12) autoportant en plusieurs épaisseurs d'une fibre optique (13) destinée à transmettre des informations, qui peut être déroulée depuis l'intérieur de l'enroulement, selon lequel la fibre optique (13) est enroulée sur un axe d'enroulement pour former un enroulement (12) et l'axe d'enroulement est retiré ultérieurement de l'enroulement (13), **caractérisé en ce que** l'enroulement (12) est enroulé sous forme de bobinage croisé, **en ce que** l'enroulement (12) avec l'axe d'enroulement laissé à l'intérieur est imprégné avec un agent d'imprégnation à base d'hydrocarbure chimiquement inerte, résistant à l'eau de mer et rendu liquide par chauffage, **en ce qu'**un degré d'imprégnation prédéfini de l'enroulement (12) est réglé par l'égouttage d'une partie de l'agent d'imprégnation et **en ce que** l'enroulement (12) est refroidi à une température inférieure à celle du changement de phase de l'agent d'imprégnation avec l'axe d'enroulement en rotation orienté horizontalement et l'axe d'enroulement est retiré de l'enroulement (12) refroidi.

2. Procédé selon la revendication 1, **caractérisé en ce que** la fibre optique (13) est tournée sur elle-même à chaque spire lors de l'enroulement.

3. Procédé selon la revendication 1 ou 2, **caractérisé en ce que** la fibre optique (13) est soumise à une force de traction lors de l'enroulement et **en ce que** la force de traction est réduite progressivement de l'enroulement de la couche de spires la plus intérieure jusqu'à l'enroulement de la couche de spires la plus extérieure.

4. Procédé selon la revendication 3, **caractérisé en ce que** la force de traction est maintenue constante pendant l'enroulement d'une couche de spires.

5. Procédé selon l'une des revendications 1 à 4, **caractérisé en ce qu'**on utilise un agent d'imprégnation avec une température de changement de phase qui est supérieure à la température de service maximale de la bobine de fibres optiques.

6. Procédé selon l'une des revendications 1 à 5, **caractérisé en ce que** l'imprégnation de l'enroulement (12) est effectuée sous vide.

7. Procédé selon l'une des revendications 1 à 6, **caractérisé en ce que** le degré d'imprégnation de l'enroulement (12) est déterminé à l'aide de la mesure du poids de l'enroulement (12) s'égouttant.

8. Procédé selon l'une des revendications 1 à 7, **caractérisé en ce que** de la vaseline est utilisée comme agent d'imprégnation.

9. Procédé selon l'une des revendications 1 à 7, **caractérisé en ce qu'**une cire ou un gel à base de cire est utilisé(e) comme agent d'imprégnation.

10. Procédé selon l'une des revendications 1 à 7, **caractérisé en ce qu'**un mélange de vaseline et de cires à haut point de fusion, de préférence avec d'autres additifs, est utilisé comme agent d'imprégnation.

11. Procédé selon l'une des revendications 1 à 7, **caractérisé en ce qu'**un mélange d'huile blanche et de cire est utilisé comme agent d'imprégnation.

12. Procédé selon l'une des revendications 1 à 7, **caractérisé en ce qu'**un mélange d'huile de ricin, de préférence avec une proportion de 85 % à 95 %, et de savon de calcium est utilisé comme agent d'imprégnation.
